# EUROPÄISCHE PATENTSCHRIFT

(11) **EP 2 695 669 B1**
(45) Veröffentlichungstag und Bekanntmachung des Hinweises auf die Patenterteilung: **12.10.2016**
(21) Anmeldenummer: 12179792.2
(22) Anmeldetag: 09.08.2012
(51) Int. Cl.: B01D 71/28, B01D 71/62, B01D 71/68, B01D 69/02, B01D 71/80, B01D 67/00

(54) **Membran mit isoporöser trennaktiver Schicht und Verfahren zur Herstellung einer Membran**
Membrane with isoporous release coating and method for producing a membrane
Membrane avec couche isoporeuse de séparation et procédé de fabrication d'une membrane

(43) Veröffentlichungstag der Anmeldung: 12.02.2014
(73) Patentinhaber: Helmholtz-Zentrum Geesthacht Zentrum für Material- und Küstenforschung GmbH, 21502 Geesthacht (DE)
(72) Erfinder: Abetz, Volker, 21335 Lüneburg (DE); Clodt, Juliana, 22117 Hamburg (DE); Filiz, M. Volkan, 22763 Hamburg (DE); Buhr, Kristian, 20253 Hamburg (DE)
(74) Vertreter: Seemann & Partner Patentanwälte mbB

(56) Entgegenhaltungen:
- EP-A1- 2 108 674
- WO-A1-2011/098851
- DE-A1- 19 738 913
- DE-A1-102006 045 282
- ADINA JUNG ET AL: "Structure Formation of Integral Asymmetric Composite Membranes of Polystyrene-block-Poly(2-vinylpyridine) on a Nonwoven", MACROMOLECULAR MATERIALS AND ENGINEERING, Bd. 297, Nr. 8, 9. Februar 2012 (2012-02-09), Seiten 790-798, XP055049396, ISSN: 1438-7492, DOI: 10.1002/mame.201100359

## Beschreibung

Die Erfindung betrifft ein Verfahren zur Herstellung einer Polymermembran mit einer isoporösen trennaktiven Schicht, insbesondere einer Ultrafiltrationsmembran oder Nanofiltrationsmembran.

Die Erfindung betrifft ferner eine nach dem erfindungsgemäßen Verfahren hergestellte oder herstellbare Polymermembran, ein Filtrationsmodul, insbesondere Ultrafiltrationsmodul oder Nanofiltrationsmodul sowie eine Verwendung einer Polymermembran oder eines Filtrationsmoduls gemäß der Erfindung.

Für die Ultrafiltration werden heutzutage überwiegend Membranen eingesetzt, die nach einem so genannten Phaseninversionsverfahren hergestellt werden. Diese Membranen weisen üblicherweise eine mehr oder weniger große statistische Streuung bei der Verteilung der Porengröße auf, vgl. S. Nunes, K.-V. Peinemann (HrG.):
Membrane Technology in the Chemical Industry, Wiley-VCH, Weinheim 2006, S. 23-32. Solche Membranen neigen zum so genannten "Fouling" und lassen wegen der breiten Streuung in der Verteilung der Porengröße keine präzise Trennung eines Stoffgemisches zu. Unter "Fouling" versteht man ein schnelles Verblocken der großen Poren, da ein Großteil der durch die Membran tretenden Flüssigkeit zunächst durch die großen Poren tritt. Seit einiger Zeit wird daher versucht, isoporöse Membranen herzustellen, d.h. Membranen mit einer geringen Streuung in der Verteilung ihrer Porengröße.

In dem deutschen Patent Nr. 10 2006 045 282 der Anmelderin ist ein Verfahren offenbart, mit dem Polymermembranen mit isoporösen trennaktiven Oberflächen herstellbar sind. Hierzu wird ein amphiphiles Blockcopolymer in einer Gießlösung mit einem oder mehreren Lösungsmitteln gelöst, zu einem Film ausgestrichen und der Film in ein Fällbad eingetaucht.

Dieses Verfahren nutzt den Umstand aus, dass die Polymerblöcke des amphiphilen Blockcopolymers untereinander nicht mischbar sind. Die Blockcopolymere bilden in der Gießlösung keine oder nur eine schwache Mizellenmorphologie aus. Die Mikrophasenseparation setzt bei Abdampfen des Lösungsmittels bzw. des Lösungsmittelgemisches ein nach dem Bilden des Films und vor dem Eintauchen in das Fällbad.

Durch das Eintauchen dieses Films in ein Fällbad wird der Rest des Lösungsmittels verdrängt und es findet ein bekannter Phaseninversionsprozess statt, der in einer bekannten schwammartigen Struktur resultiert. In einigen Fällen bleibt dabei die zuvor eingestellte mikrophasenseparierte isoporöse Struktur der oberflächennahen Schicht trotz des Eintauchens in das Fällbad erhalten. Diese geht dann direkt in die schwammartige Struktur über. Weitere Angaben sind in DE 10 2006 045 282 A1 enthalten.

Die resultierende integral-asymmetrische Struktur entsteht aus einer Kombination von zwei verschiedenen thermodynamischen Prozessen. Das Verfahren ist für Blockcopolymere mit unterschiedlichen Polymerkomponenten durchführbar, die sich mittels Mikrophasenseparation in einem Lösungsmittel entmischen. So wurde in DE 10 2006 045 282 A1 die integral-asymmetrische Struktur der Blockcopolymermembranen am Beispiel einer auf PS-*b*-P4VP (Polystyrol-*b-*Poly-4-Vinylpyridin) beruhenden Membran gezeigt. Ähnliche Resultate wurden auch mit den chemisch deutlich unterschiedlichen PS-*b*-P2VP (Polystyrol-*b*-Poly-2-Vinylpyridin) und PS-*b*-PEO (Polystyrol-*b*-Polyethylenoxid) erzielt. Das Ergebnis mit PS-*b*-P2VP ist in A. Jung et al. (2012), "Structure Formation of Integral Asymmetric Composite Membranes of Polystyrene-block-Poly(2-vinylpyridine) on a Nonwoven", Macromol. Mater. Eng.. doi: 10.1002/mame.201100359 veröffentlicht. Die Resultate mit PS-*b-*PEO sind in der deutschen Patentanmeldung Nr. 10 2012 207 338.8 der Anmelderin gezeigt.

Diese technische Lehre wurde weiterentwickelt in der internationalen Patentanmeldung WO 2011/098851 A1 von Peinemann et al.,

Darin wird vorgeschlagen, der Gießlösung ein Metallsalz zuzugeben, das mit wenigstens einem der Polymerblöcke des Blockcopolymers Komplexe formt. Bei den Metallsalzen handelt es sich um starke Komplexbildner, nämlich Übergangsmetalle wie beispielsweise Kupfer, Kobalt, Nickel, Eisen unter anderem. Als Beispiel wird ein Copolymer aus Polystyrol (PS) und Poly-4-vinylpyridin (P4VP) mit einem Zusatz von Kupferacetat genannt.

Das Polystyrol agiert als Matrixbildner, während das P4VP in der ausgefällten Membran die Poren bildet. Das Kupfer bildet Komplexe mit den Pyridingruppen des P4VP, der hydrophilen Komponente des Blockcopolymers. Der Komplex stabilisiert dabei während des Abdampfens von Lösungsmittel und während des Phaseninversionsprozesses die Porenstruktur der Oberfläche.

Die Übergangsmetallkomplexe sind vergleichsweise stark und schlecht auswaschbar, so dass in gebrauchten Membranen im Laufe der Zeit biologisch schädliche Übergangsmetallionen ausgewaschen werden, was die Membranen für biologische Anwendungen, und besonders für gesundheitsrelevante Anwendungen, unbrauchbar macht.

Es ist daher die Aufgabe der vorliegenden Erfindung, ein Verfahren zur Herstellung einer Polymermembran sowie die entsprechende Polymermembran zur Verfügung zu stellen, mittels deren auch biologische Anwendungen im industriellen Maßstab sicher durchzuführen sind. Auch eine Regelbarkeit der Porengröße ist in einigen Fällen gewünscht.

Die der Erfindung zugrunde liegende Aufgabe wird gelöst durch ein Verfahren zur Herstellung einer Polymermembran mit einer isoporösen trennaktiven Schicht, insbesondere einer Ultrafiltrationsmembran oder Nanofiltrationsmembran, mit den folgenden Schritten:
- Herstellen einer Gießlösung mit wenigstens einem Lösungsmittel, in dem wenigstens ein amphiphiles Blockcopolymer mit wenigstens zwei verschiedenen Polymerblöcken und wenigstens ein Kohlenhydrat gelöst werden, wobei das Polymer einen Gewichtsanteil zwischen 10 Gew.-% und 40 Gew.-% und das Kohlenhydrat einen Gewichtsanteil zwischen 0,1 Gew.-% und 5 Gew.-% der Lösung ausmacht,
- Ausstreichen der Gießlösung zu einem Film,
- während eines Wartezeitraums zwischen 5 Sekunden und 60 Sekunden Abdampfenlassen eines oberflächennahen Teils des wenigstens einen Lösungsmittels,
- Ausfällen einer Membran durch Eintauchen des Films in ein wenigstens ein Nichtlösungsmittel für das Blockcopolymer umfassendes Fällbad,
wobei das wenigstens eine Blockcopolymer zwei oder drei untereinander verschiedene Polymerblöcke A, B und gegebenenfalls C der Konfiguration A-B, A-B-A oder A-B-C umfasst, wobei die Polymerblöcke jeweils aus der Gruppe von Polystyrol, Poly-4-vinylpyridin, Poly-2-vinylpyridin, Polybutadien, Polyisopren, Poly(ethylen-stat-butylen), Poly(ethylen-alt-propylen), Polysiloxan, Polyalkylenoxid, Poly-ε-caprolacton, Polylactid, Polyalkylmethacrylat, Polymethacrylsäure, Polyalkylacrylat, Polyacrylsäure, Polyhydroxyethylmethacrylat, Polyacrylamid oder Poly-N-alkylacrylamid, Polysulfon, Polyanilin, Polypyrrol, Polytriazol, Polyvinylimidazol, Polytetrazol, Polyethylendiamin, Polyvinylalkohol, Polyvinylpyrrolidon, Polyoxadiazol, Polyvinylsulfonsäure, Polyvinylphosphonsäure oder Polymere mit quaternären Ammoniumgruppen ausgewählt sind.

Im Unterschied zum Verfahren gemäß WO 2011/098851 A1 werden keine komplexbildenden Metallsalze zur Gießlösung hinzugegeben, sondern Kohlenhydrate. Diese Stoffe sind biologisch verträglicher als die Übergangsmetalle und deren Salze. Bei Anwendung im erfindungsgemäßen Verfahren zeigen die Kohlenhydrate eine deutliche Stabilisierung der isoporösen trennaktiven Oberfläche bei der Phaseninversion durch Eintauchen in ein Fällbad.

Die unterstützende Wirkung der Kohlenhydrate bei der Phasenseparation wird darauf zurückgeführt, dass die Kohlenhydrate Wasserstoffbrückenbindungen zum hydrophilen Block der Blockcopolymere ausbilden können. Durch die Wasserstoffbrücken wird die Viskosität der Polymerlösung stark erhöht, so dass eine geringere Konzentration der Blockcopolymere in der Lösung ausreicht, um die erfindungsgemäße Struktur mit der isoporösen trennaktiven Schicht auszubilden.

Durch den Einsatz von Kohlenhydraten zur Verbesserung der Membranstruktur entfällt die Problematik einer dauerhaften nachträglichen Abgabe von giftigen Metallionen durch die Membran bei deren Anwendung. Da Kohlenhydrate ungiftig sind, ist der Einsatz der Membran für medizinisch bzw. biologisch relevante Prozesse unbedenklich.

Der Zusatz von Kohlenhydraten zur Blockcopolymerlösung erhöht deren Viskosität, was zu einem verminderten Eindringen derselben in den porösen Träger führt. Die Gießlösung läuft also gegebenenfalls nicht so leicht in ein Trägervlies ein. Auch wird es hierdurch möglich, mit niedrigeren Blockcopolymerkonzentrationen in der Gießlösung zu arbeiten, was zu einer Materialersparnis bei den relativ teuren Blockcopolymeren führt. Die Erfindung ersetzt weiterhin teurere Übergangsmetallsalze durch viel preiswertere Kohlenhydrate. Die Reinigung der hergestellten Membran ist unproblematisch. Die entstehenden Abwässer bei der Membranherstellung sind nicht schwermetallbelastet.

Einige erfindungsgemäß hergestellte Membranen zeigen außerdem einstellbare Porengrößen. So kann über eine Veränderung des pH-Werts einer durch die Poren strömenden Lösung der Wasserfluss durch die Membran in einem weiten Bereich eingestellt werden. Die Steuerung über den pH-Wert gelingt, wenn der porenbildende Polymerblock auf Änderungen des pH-Werts reagiert, sich beispielsweise ausdehnt oder zusammenzieht und so die Poren verengt oder erweitert.

Die Verfahrensparameter werden vorzugsweise abhängig von den gewählten Edukten optimiert. Die Gießlösung wird vorzugsweise vor dem Gießen gerührt, bis das Blockcopolymer sich gelöst hat, insbesondere für eine Zeitdauer von bis zu 48 Stunden. Die Gießlösung wird vorzugsweise auf ein Trägermaterial aufgebracht, vorzugsweise auf einen ungewebten Vliesstoff. Die Abdampfzeit beträgt zwischen 5 und 60 Sekunden, vorzugsweise weniger als 25 Sekunden und insbesondere bis zu 15 Sekunden.

Das Eintauchen in das Fällbad erfolgt vorzugsweise für eine Dauer zwischen 1 Minute und 1 Stunde, vorzugsweise zwischen 5 und 10 Minuten. Nach der Entnahme aus dem Fällbad wird die Membran vorteilhafterweise getrocknet, vorzugsweise für eine Dauer von 12 bis 48 Stunden, vorzugsweise an der Luft und/oder in einem Vakuum-Ofen, um restliches Lösungsmittel zu entfernen. Eine lange Trocknungszeit ist bevorzugt.

Besonders bevorzugt ist es, wenn das Kohlenhydrat Saccharose, D(+)-Glucose, D(-)-Fructose und/oder Cyclodextrin, insbesondere α-Cyclodextrin, ist. D(+)-Glucose wird auch als Traubenzucker bezeichnet, D(-)-Fructose als Fruchtzucker sowie Saccharose als Haushaltszucker. Diese Kohlenhydrate zeigen einen starken Stabilisierungseffekt für die isoporöse trennaktive Oberfläche. Erfindungsgemäß umfasst das wenigstens eine Blockcopolymer zwei oder drei untereinander verschiedene Polymerblöcke A, B und gegebenenfalls C der Konfiguration A-B, A-B-A oder A-B-C, wobei die Polymerblöcke jeweils aus der Gruppe von Polystyrol, Poly-4-vinylpyridin, Poly-2-vinylpyridin, Polybutadien, Polyisopren, Poly(ethylen-stat-butylen), Poly(ethylen-alt-propylen), Polysiloxan, Polyalkylenoxid, Poly-ε-caprolacton, Polylactid, Polyalkylmethacrylat, Polymethacrylsäure, Polyalkylacrylat, Polyacrylsäure, Polyhydroxyethylmethacrylat, Polyacrylamid oder Poly-N-alkylacrylamid, Polysulfon, Polyanilin, Polypyrrol, Polytriazol, Polyvinylimidazol, Polytetrazol, Polyethylendiamin, Polyvinylalkohol, Polyvinylpyrrolidon, Polyoxadiazol, Polyvinylsulfonsäure, Polyvinylphosphonsäure oder Polymere mit quaternären Ammoniumgruppen ausgewählt sind. Diese Polymere bilden eine Auswahl von hydrophilen und hydrophoben Polymeren, die als Polymerblöcke im amphiphilen Blockcopolymer Verwendung finden können.

Die Blockcopolymere und die Polymerblöcke weisen vorzugsweise eine geringe Polydispersität auf, insbesondere weniger als 1,5, insbesondere weniger als 1,2. Damit werden die Selbstorganisation der Blockcopolymere und die Mikrophasenbildung unterstützt.

Vorteilhafterweise sind zusätzlich oder alternativ hierzu die Polymerlängen der wenigstens zwei Polymerblöcke des amphiphilen Blockcopolymers relativ zueinander so gewählt, dass eine Selbstorganisation im Lösungsmittel zur Bildung einer sphärischen oder zylindrischen Mizellenstruktur im Lösungsmittel führt, insbesondere ein Längenverhältnis zwischen etwa 2:1 und etwa 10:1, insbesondere zwischen etwa 3:2 und 6:1. Diese Längenverhältnisse der Majoritätskomponente zur Minoritätskomponente der Blockcopolymere führen zu der gewünschten Mizellenstruktur, also dem Einschluss von einzelnen sphärischen Mizellen der Minoritätskomponente im Bulk der Majoritätskomponente oder zu zylinderischen Mizellenstrukturen, bei denen die Minoritätskomponenten die Zylinder im Bulk der Majoritätskomponente bilden.

Vorzugsweise weist das Blockcopolymer ein Molekulargewicht zwischen 100 kDa und 600 kDa, insbesondere zwischen 130 kDa und 250 kDa, auf. In diesem Bereich ist die Porengröße besonders fein einstellbar durch Auswahl des Molekulargewichts.

Vorteilhafterweise wird wenigstens ein Homopolymer und/oder Copolymer in der Lösung gelöst, das einem Polymerblock des amphiphilen Blockcopolymers mit gleicher oder abweichender Polymerlänge entspricht. Auf diese Weise lässt sich die Porenstruktur der isoporösen Trennschicht sehr fein einstellen, insbesondere bezüglich des Durchmessers der Poren und des Abstandes der Poren. So wird ein Zusatz derjenigen Polymerkomponente, die im Blockcopolymer die Poren bildet, zu einer Vergrößerung des durchschnittlichen Porendurchmessers führen, während ein Zusatz von Homopolymer der matrixbildenden Komponente, die üblicherweise die Majoritätskomponente des Blockcopolymers ist, zu einer Vergrößerung des Abstandes zwischen den Poren führt. Hierbei sollte allerdings die Menge des Homopolymers nicht so groß werden, dass die Mizellen sich nicht mehr zu durchgängigen Poren verbinden können.

Vorteilhafterweise werden mehrere Lösungsmittel verwendet, wobei die Polymerblöcke des Blockcopolymers in den unterschiedlichen Lösungsmitteln unterschiedlich gut löslich sind und die Lösungsmittel unterschiedlich flüchtig sind. Die unterschiedliche Flüchtigkeit wird dazu verwendet, beim Abdampfen die verschiedenen Polymerblöcke selektiv zu verfestigen. Als Lösungsmittel wird vorzugsweise Dimethylformamid und/oder Dimethylacetamid und/oder N-Methylpyrrolidon und/oder Dimethylsulfoxid und/oder Tetrahydrofuran und/oder Dioxan oder eine Mischung aus zwei oder mehr der Lösungsmittel verwendet.

Das Polymer macht vorzugsweise einen Gewichtsanteil zwischen 10 Gew.-% und 40 Gew.-%, insbesondere zwischen 15 Gew.-% und 25 Gew.-%, der Lösung aus. Ferner macht vorteilhafterweise das Kohlenhydrat einen Gewichtsanteil zwischen 0,1 Gew.-% und 5 Gew.-%, insbesondere zwischen 0,5 Gew.-% und 2 Gew.-%, der Lösung aus.

Der Wartezeitraum beträgt bevorzugt zwischen 5 Sekunden und 60 Sekunden, insbesondere weniger als 25 Sekunden, insbesondere bis zu 15 Sekunden

Als Fällbad wird vorteilhafterweise Wasser und/oder Methanol und/oder Ethanol und/oder Aceton verwendet.

Vorteilhafterweise werden Zusätze, die spezifische Wechselwirkungen mit dem wasserlöslichen Polymerblock eingehen, in die Gießlösung eingebracht, insbesondere p-Nitrophenol, Hydrochinon und/oder Rucinol. Diese Zusätze machen vorteilhafterweise einen Gewichtsanteil zwischen 0,1 Gew.-% und 5 Gew.-%, insbesondere zwischen 0,5 Gew.-% und 2 Gew.-%, der Lösung aus.

Eine stabilere Membran wird erhalten, wenn die Gießlösung auf einem Trägermaterial ausgegossen wird, insbesondere auf einem nichtgewebten Vliesmaterial. Die Erhöhung der Viskosität durch Einbringen der Kohlenhydrate hat den weiteren Vorteil, dass die Gießlösung nicht so stark in das Vliesmaterial eindringt wie eine Gießlösung ohne Kohlenhydrate. Dies spart Material.

Ferner wird vorzugsweise das Kohlenhydrat nach dem Ausfällen der Membran ausgewaschen.

Die der Erfindung zugrunde liegende Aufgabe wird auch durch eine Polymermembran mit isoporöser trennaktiver Schicht gelöst, insbesondere einer Ultrafiltrationsmembran oder Nanofiltrationsmembran, hergestellt oder herstellbar nach einem erfindungsgemäßen, zuvor beschriebenen Verfahren mit einem Verhältnis der maximalen Porendurchmesser zu den minimalen Porendurchmessern von weniger als 3, wobei die Polymermembran nach dem Ausfällen der Membran wenigstens ein Kohlenhydrat enthält. Diese erfindungsgemäße Membran hat die zuvor genannten Eigenschaften.

Ferner wird die der Erfindung zugrunde liegende Aufgabe auch durch ein Filtrationsmodul, insbesondere Ultrafiltrationsmodul oder Nanofiltrationsmodul, mit einer erfindungsgemäßen zuvor beschriebenen Polymermembran gelöst sowie durch eine Verwendung einer erfindungsgemäßen, zuvor beschriebenen Polymermembran oder eines erfindungsgemäßen, zuvor beschriebenen Filtrationsmoduls zur Reinigung von Wasser oder von biologischen Makromolekülen oder Wirkstoffen. Die Verwendung der entsprechenden Polymermembran oder des Filtrationsmoduls mit der erfindungsgemäßen Polymermembran hat den Vorteil, dass die Membran keine toxischen Stoffe verliert, die sich in dem gefilterten Medium ansammeln, das einer biologischen Funktion zugeführt wird.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.
- Fig. 1 bis 6: rasterelektronenmikroskopische (REM) Aufnahmen von handgegossenen Membranen,
- Fig. 7 bis 13: rasterelektronenmikroskopische (REM) Aufnahmen von mittels einer Membranziehmaschine gezogenen Membranen und
- Fig. 14 bis 16: rasterelektronenmikroskopische (REM) Aufnahmen von mittels einer Membranziehmaschine gezogenen Membranen mit geringerem Molekulargewicht als die vorhergehenden Membranen.

Die Erfindung wird im Folgenden anhand einiger Beispiele erfindungsgemäßer und im Vergleich dazu nicht erfindungsgemäßer Membranen dargestellt.

Im Folgenden werden einige Abkürzungen verwendet. So steht "PS" für Polystyrol (Polystyrene), "P4VP" für Poly-4-vinylpyridin, "THF" für Tetrahydrofuran, "DMF" für Dimethylformamid. Blockcopolymere werden beispielsweise mit "PS₈₃-*b*-P4VP₁₇ 190 kDa" bezeichnet. Dies bedeutet ein Blockcopolymer mit einem Gesamtmolekulargewicht von 190 kDa, dessen Majoritätskomponente Polystyrol 83% und dessen Minoritätskomponente Poly-4-vinylpyridin 17% des Gesamtgewichts des Blockcopolymers ausmachen. Ein Lösungsmittelgemisch THF/DMF 35/65 beispielsweise besteht aus 35 Gew.-% THF und 65 Gew.-% DMF.

### Beispiel 1

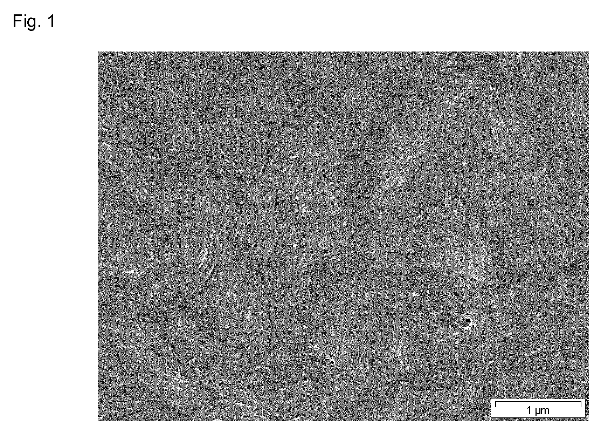

In einer ersten Versuchsreihe, deren Ergebnisse in den Figuren 1 bis 6 dargestellt sind, wurden jeweils Membranen auf der Grundlage einer Lösung von 22 Gew.-% PS₈₃-*b*-P4VP₁₇ 190 kDa im Lösungsmittelgemisch THF/DMF 35/65 per Hand gezogen ("handcasting"). Die Rakelhöhe betrug jeweils 200 µm, als Phaseninversionsbad wurde H₂O bei 20 °C verwendet.

Die Abdampfzeiten und die Kohlenhydratzusätze wurden variiert.

### Vergleichsbeispiel 1

Das erste Vergleichsbeispiel betrifft eine Membran, die bei einer Abdampfzeit von 15 Sekunden ohne Zusätze von Kohlenhydraten gemäß den oben zu Beispiel 1 genannten Bedingungen handgezogen wurde.

In Fig. 1 ist eine REM-Aufnahme der Oberfläche der Membran gemäß Vergleichsbeispiel 1 gezeigt. Diese Membran zeigt keine wesentliche Porosität.

### Beispiel 1a

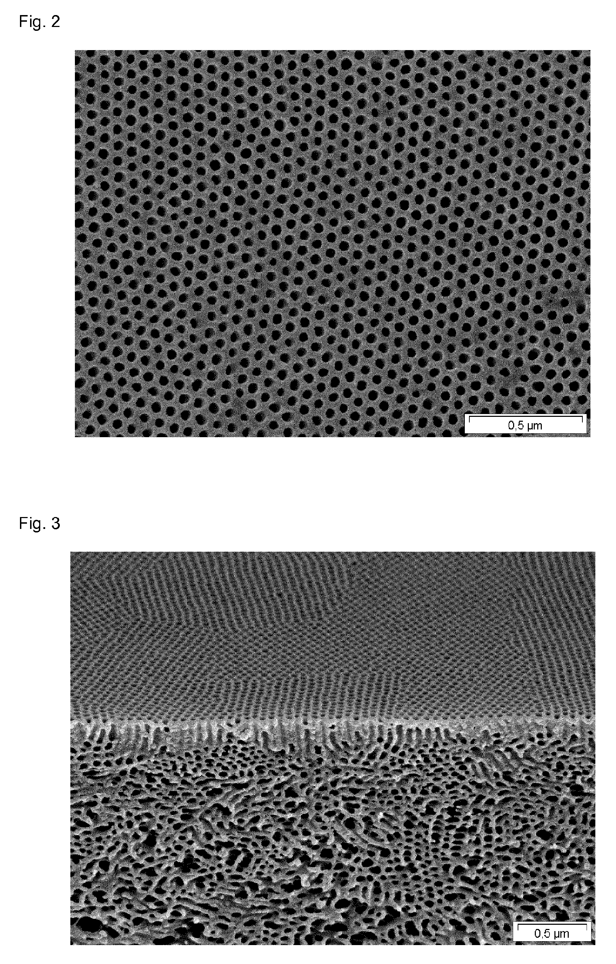

In den Figuren 2 und 3 sind REM-Aufnahmen der Oberfläche (Fig. 2) und des Querbruchs (Fig. 3) einer unter sonst gleichen Bedingungen bei Zusatz von 0,5 Gew.-% α-Cyclodextrin in der Lösung handgezogenen Membran (Beispiel 1a) gezeigt. Diese weist die erfindungsgemäße integral-asymmetrische Struktur auf, bei der eine isoporöse Mikrophasenmorphologie, die sich aufgrund der Selbstorganisation der Polymerblöcke der Blockcopolymere ausgebildet hat, direkt in die typische schwammartige Struktur der lösungsmittelinduzierten phasenseparierten Polymermembran übergeht.

### Beispiel 1b

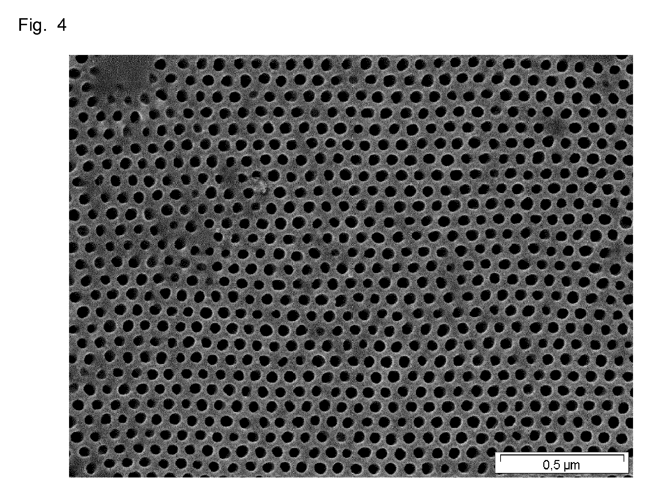

Die in Fig. 4 gezeigte Membran (Beispiel 1b), deren Oberfläche wiederum die mikrophasenseparierte isoporöse Porenverteilung aufweist, wurde wie beim Vergleichsbeispiel 1, allerdings mit einer Abdampfzeit von 10 Sekunden und unter Zusatz von 1 Gew.-% D(+)-Glucose zur Lösung erzeugt.

### Beispiel 1c

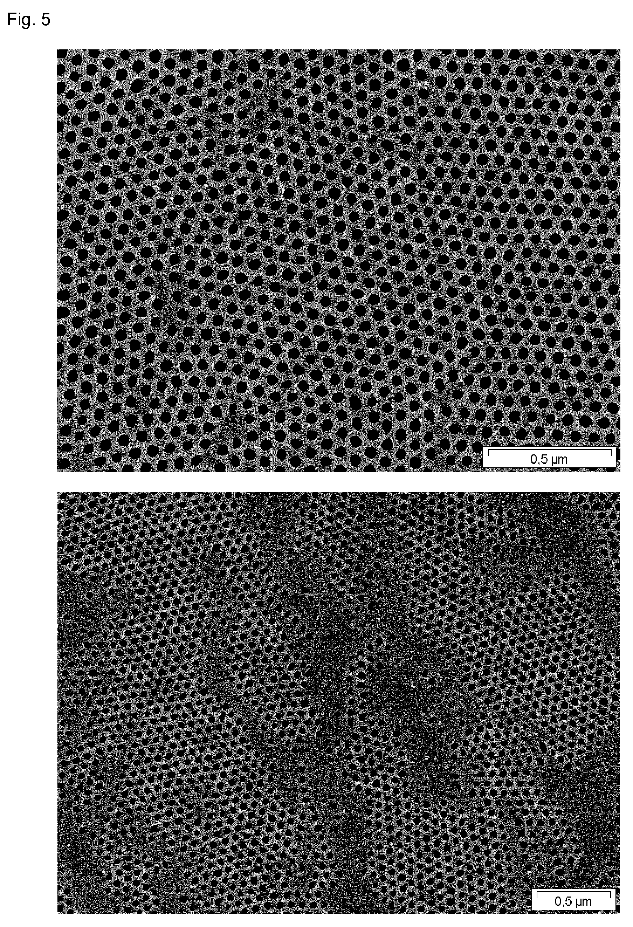

Unter den Bedingungen des Vergleichsbeispiels 1 wird eine Membran mit einer Abdampfzeit von 8 Sekunden unter Zusatz von 1 Gew.-% Haushaltszucker zur Lösung erzeugt (Beispiel 1c). Im oberen und unteren Teil von Fig. 5 sind zwei Bereiche der Oberfläche der so erzeugten Membran gezeigt. Der überwiegende Teil weist die erfindungsgemäße isoporöse Oberfläche auf, während ein kleinerer Teil in einigen Bereichen nicht voll entwickelt ist und in diesen Teilbereichen keine Porosität aufweist. Dies betrifft deutlich weniger als 30% der Oberfläche der betroffenen Bereiche.

### Beispiel 1d

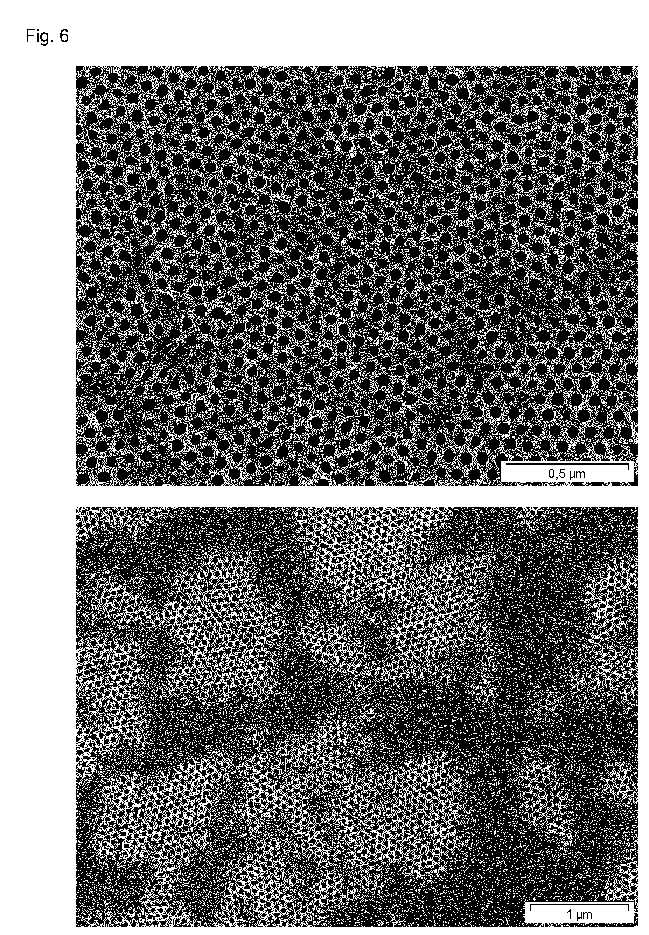

Unter den Bedingungen des Vergleichsbeispiels 1 wurde eine Membran mit einer Abdampfzeit von 12 Sekunden unter Zusatz von 1 Gew.-% D(-)-Fructose zur Lösung erzeugt (Beispiel 1d). Im oberen und unteren Teil von Fig. 6 sind zwei Bereiche der Oberfläche der so erzeugten Membran gezeigt. Der überwiegende Teil weist die erfindungsgemäße isoporöse Oberfläche auf, während ein kleinerer Teil in einigen Bereichen nicht voll entwickelt ist und in diesen Teilbereichen keine Porosität aufweist. Dies betrifft ca. 50% der Oberfläche der betroffenen Bereiche.

### Beispiel 2

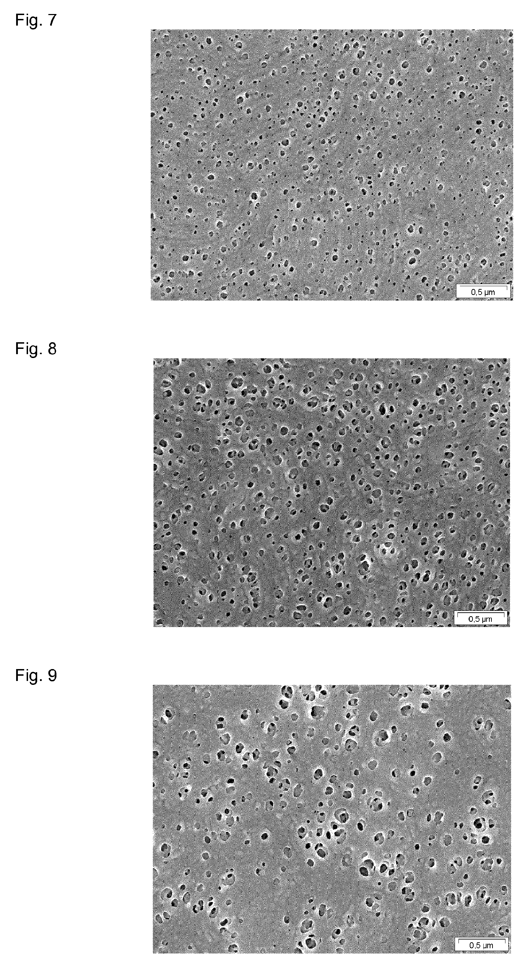

In einer zweiten Versuchsreihe gemäß den Figuren 7 bis 13 wurde verwendete Lösung beibehalten, also 22 Gew.-% PS₈₃-*b*-P4VP₁₇ 190 kDa im Lösungsmittelgemisch THF/DMF 35/65. Die Rakelhöhe betrug wiederum jeweils 200 µm, als Phaseninversionsbad wurde H₂O bei 20 °C verwendet.

Im Unterschied zur ersten Versuchsreihe (Vergleichsbeispiel 1 und Beispiele 1a bis 1d) wurden die Membranen jedoch nicht von Hand gezogen, sondern mittels einer Membranziehmaschine.

### Vergleichsbeispiel 2

Das zweite Vergleichsbeispiel betrifft eine Membran gemäß Beispiel 2, die bei verschiedenen Abdampfzeiten zwischen 6 und 15 Sekunden ohne Zusätze von Kohlenhydraten mittels einer Membranziehmaschine gezogen wurde. Die Abdampfzeiten betrugen für die Figuren 7, 8 und 9 jeweils 6, 10 bzw. 15 Sekunden. Mit steigender Abdampfzeit von Fig. 7 nach Fig. 9 wächst die Größe der Poren an, jedoch zeigen sie nicht die gewünschte isoporöse Verteilung.

### Beispiel 2a

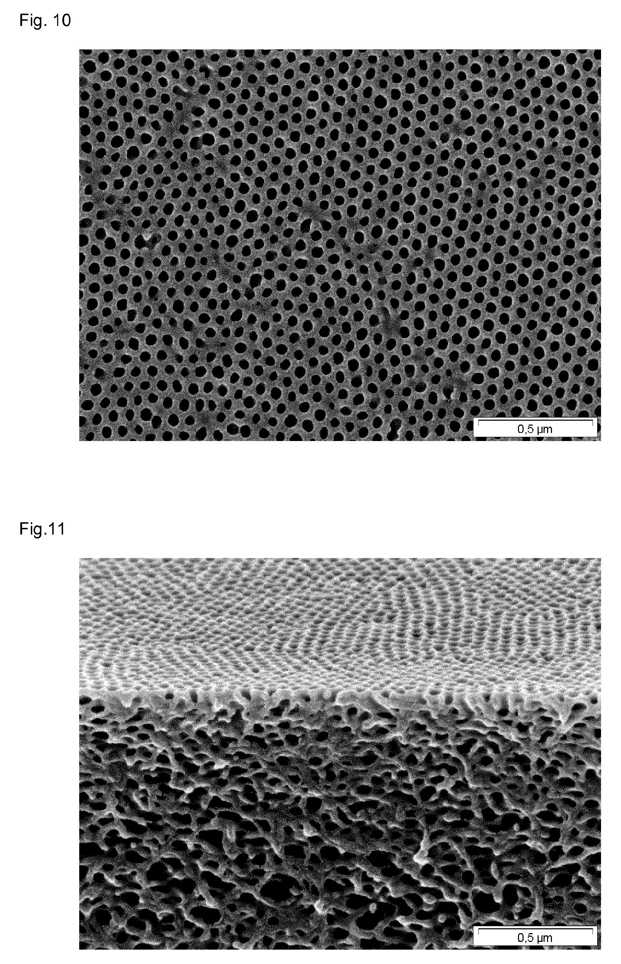

In den Figuren 10 und 11 sind REM-Aufnahmen der Oberfläche (Fig. 10) und des Querbruchs (Fig. 11) einer unter sonst gleichen Bedingungen wie im Vergleichsbeispiel 2 bei einer Abdampfzeit von 5 Sekunden und unter Zusatz von 1 Gew.-% α-Cyclodextrin zur Lösung maschinengezogenen Membran (Beispiel 2a) gezeigt. Diese weist die erfindungsgemäße integral-asymmetrische Struktur auf, bei der eine isoporöse Mikrophasenmorphologie, die sich aufgrund der Selbstorganisation der Polymerblöcke der Blockcopolymere ausgebildet hat, direkt in die typische schwammartige Struktur der lösungsmittelinduzierten phasenseparierten Polymermembran übergeht.

### Beispiel 2b

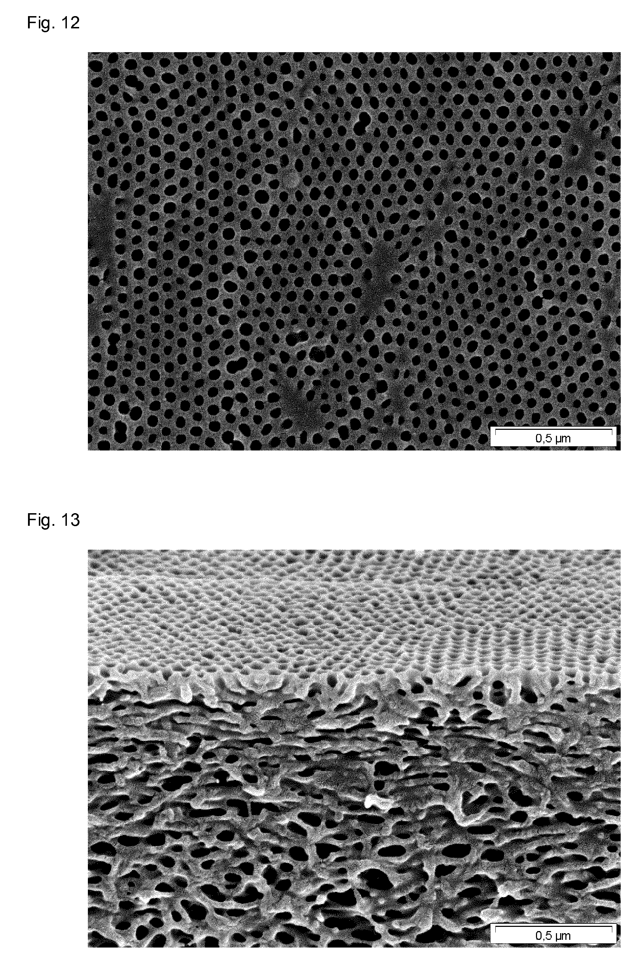

In den Figuren 12 und 13 sind REM-Aufnahmen der Oberfläche (Fig. 12) und des Querbruchs (Fig. 13) einer unter sonst gleichen Bedingungen wie im Vergleichsbeispiel 2 bei einer Abdampfzeit von 11 Sekunden und unter Zusatz von 1,5 Gew.-% D(+)-Glucose zur Lösung maschinengezogenen Membran (Beispiel 2b) gezeigt. Diese weist die erfindungsgemäße integral-asymmetrische Struktur auf, bei der eine isoporöse Mikrophasenmorphologie, die sich aufgrund der Selbstorganisation der Polymerblöcke der Blockcopolymere mit wenigen Defekten ausgebildet hat, direkt in die typische schwammartige Struktur der lösungsmittelinduzierten phasenseparierten Polymermembran übergeht.

### Beispiel 3

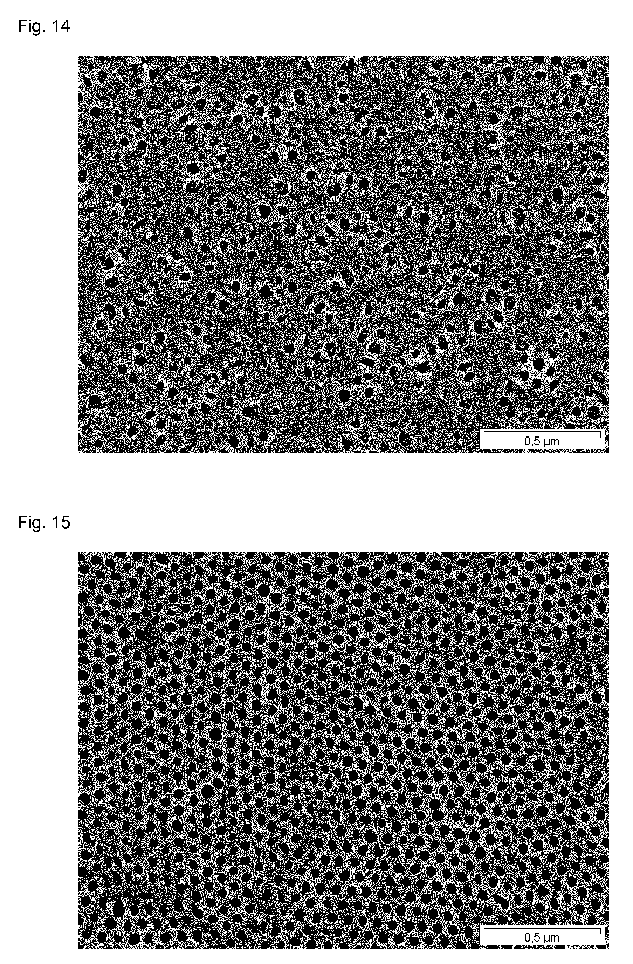

In einer dritten Versuchsreihe, deren Ergebnisse in den Figuren 14 bis 16 gezeigt sind, wurde eine Lösung mit einem Copolymer mit geringerem Molekulargewicht verwendet. Die Lösung war eine Lösung mit 22 Gew.-% PS₈₁-*b*-P4VP₁₉ 160 kDa im Lösungsmittelgemisch THF/DMF 40/60. Die Rakelhöhe betrug wiederum jeweils 200 µm, als Phaseninversionsbad wurde H₂O bei 20 °C verwendet. In dieser Versuchsreihe wurde jeweils eine Abdampfzeit von 5 Sekunden verwendet. Wie in der zweiten Versuchsreihe (Beispiel 2) wurden die Membranen mittels einer Membranziehmaschine gezogen.

### Vergleichsbeispiel 3

Das dritte Vergleichsbeispiel betrifft eine Membran gemäß Beispiel 3, die ohne Zusätze von Kohlenhydraten mittels einer Membranziehmaschine gezogen wurde. Ihre Oberfläche ist in Fig. 14 dargestellt. Die sichtbaren Poren haben nicht die gewünschte isoporöse Verteilung.

### Beispiel 3a

In der Figur 15 ist eine REM-Aufnahme der Oberfläche einer unter sonst gleichen Bedingungen wie im Vergleichsbeispiel 3 unter Zusatz von 1,5 Gew.-% D(+)-Glucose zur Lösung maschinengezogenen Membran (Beispiel 3a) gezeigt. Diese weist die erfindungsgemäße integral-asymmetrische Struktur auf, bei der eine isoporöse Mikrophasenmorphologie, die sich aufgrund der Selbstorganisation der Polymerblöcke der Blockcopolymere mit wenigen Defekten ausgebildet hat, direkt in die typische schwammartige Struktur der lösungsmittelinduzierten phasenseparierten Polymermembran übergeht.

### Beispiel 3b

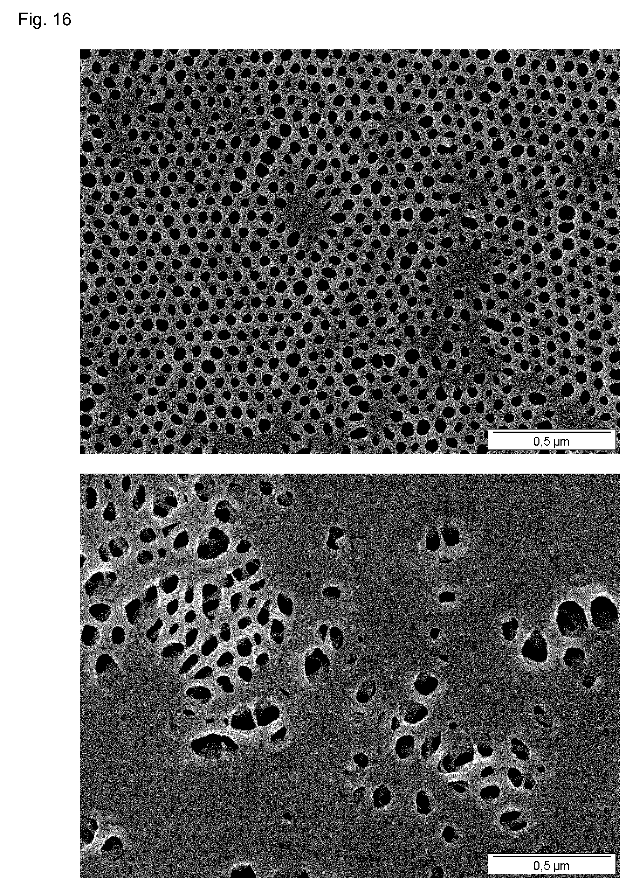

In Fig. 16 sind zwei REM-Aufnahmen verschiedener Bereiche einer Oberfläche einer Membran gezeigt, die wie gemäß Beispiel 3a hergestellt wurde, allerdings mit einem Zusatz von 2 Gew.-% D(+)- Glucose und einer Konzentration des Blockcopolymers in der Lösung von lediglich 20 Gew.-% anstelle von 22 Gew.-%. Es liegen überwiegend die oben in Fig. 16 gezeigten gut geordneten Bereiche vor, während geringe Anteile der Oberfläche die unzureichend geordnete Struktur gemäß der unteren Darstellung von Fig. 16 aufweisen.

Hiermit ist gezeigt, dass eine Verringerung der Polymerkonzentration möglich ist, wobei Feineinstellungen der Herstellungsbedingungen zu einer weiteren Verbesserung bei gleichzeitiger Einsparung an teurem Copolymer führen können.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

## Patentansprüche

1. Verfahren zur Herstellung einer Polymermembran mit einer isoporösen trennaktiven Schicht, insbesondere einer Ultrafiltrationsmembran oder Nanofiltrationsmembran, mit den folgenden Schritten:
- Herstellen einer Gießlösung mit wenigstens einem Lösungsmittel, in dem wenigstens ein amphiphiles Blockcopolymer mit wenigstens zwei verschiedenen Polymerblöcken und wenigstens ein Kohlenhydrat gelöst werden, wobei das Polymer einen Gewichtsanteil zwischen 10 Gew.-% und 40 Gew.-% und das Kohlenhydrat einen Gewichtsanteil zwischen 0,1 Gew.-% und 5 Gew.-% der Lösung ausmacht,
- Ausstreichen der Gießlösung zu einem Film,
- während eines Wartezeitraums zwischen 5 Sekunden und 60 Sekunden Abdampfenlassen eines oberflächennahen Teils des wenigstens einen Lösungsmittels,
- Ausfällen einer Membran durch Eintauchen des Films in ein wenigstens ein Nichtlösungsmittel für das Blockcopolymer umfassendes Fällbad,
wobei das wenigstens eine Blockcopolymer zwei oder drei untereinander verschiedene Polymerblöcke A, B und gegebenenfalls C der Konfiguration A-B, A-B-A oder A-B-C umfasst, wobei die Polymerblöcke jeweils aus der Gruppe von Polystyrol, Poly-4-vinylpyridin, Poly-2-vinylpyridin, Polybutadien, Polyisopren, Poly(ethylen-stat-butylen), Poly(ethylen-alt-propylen), Polysiloxan, Polyalkylenoxid, Poly-ε-caprolacton, Polylactid, Polyalkylmethacrylat, Polymethacrylsäure, Polyalkylacrylat, Polyacrylsäure, Polyhydroxyethylmethacrylat, Polyacrylamid, Poly-N-alkylacrylamid, Polysulfon, Polyanilin, Polypyrrol, Polytriazol, Polyvinylimidazol, Polytetrazol, Polyethylendiamin, Polyvinylalkohol, Polyvinylpyrrolidon, Polyoxadiazol, Polyvinylsulfonsäure, Polyvinylphosphonsäure oder Polymere mit quaternären Ammoniumgruppen ausgewählt sind.

2. Verfahren nach Anspruch 1, **dadurch gekennzeichnet, dass** das Kohlenhydrat Saccharose, D(+)-Glucose (= *Traubenzucker),* D(-)-Fructose *(= Fruchtzucker)* und/oder Cyclodextrin, insbesondere α-Cyclodextrin, ist.

3. Verfahren nach Anspruch 1 oder 2, **dadurch gekennzeichnet, dass** die Blockcopolymere und die Polymerblöcke eine geringe Polydispersität aufweisen, insbesondere weniger als 1,5, insbesondere weniger als 1,2, und/oder dass die Polymerlängen der wenigstens zwei Polymerblöcke des amphiphilen Blockcopolymers relativ zueinander so gewählt sind, dass eine Selbstorganisation im Lösungsmittel zur Bildung einer sphärischen oder zylindrischen Mizellenstruktur im Lösungsmittel führt, insbesondere ein Längenverhältnis zwischen etwa 2:1 und etwa 10:1, insbesondere zwischen etwa 3:1 und 6:1.

4. Verfahren nach einem der Ansprüche 1 bis 3, **dadurch gekennzeichnet, dass** das Blockcopolymer ein Molekulargewicht zwischen 100 kDa und 600 kDa, insbesondere zwischen 130 kDa und 250 kDa, aufweist.

5. Verfahren nach einem der Ansprüche 1 bis 4, **dadurch gekennzeichnet, dass** wenigstens ein Homopolymer und/oder Copolymer in der Lösung gelöst wird, das einem Polymerblock des amphiphilen Blockcopolymers mit gleicher oder abweichender Polymerlänge entspricht.

6. Verfahren nach einem der Ansprüche 1 bis 5, **dadurch gekennzeichnet, dass** mehrere Lösungsmittel verwendet werden, wobei die Polymerblöcke des Blockcopolymers in den unterschiedlichen Lösungsmitteln unterschiedlich gut löslich sind und die Lösungsmittel unterschiedlich flüchtig sind, wobei insbesondere als Lösungsmittel Dimethylformamid und/oder Dimethylacetamid und/oder N-Methylpyrrolidon und/oder Dimethylsulfoxid und/oder Tetrahydrofuran und/oder Dioxan oder eine Mischung aus zwei oder mehr der Lösungsmittel verwendet werden.

7. Verfahren nach einem der Ansprüche 1 bis 6, **dadurch gekennzeichnet, dass** das Polymer einen Gewichtsanteil zwischen 15 Gew.-% und 25 Gew.-% der Lösung ausmacht und/oder das Kohlenhydrat einen Gewichtsanteil zwischen 0,5 Gew.-% und 2 Gew.-% der Lösung ausmacht.

8. Verfahren nach einem der Ansprüche 1 bis 7, **dadurch gekennzeichnet, dass** der Wartezeitraum weniger als 25 Sekunden beträgt, insbesondere bis zu 15 Sekunden.

9. Verfahren nach einem der Ansprüche 1 bis 8, **dadurch gekennzeichnet, dass** als Fällbad Wasser und/oder Methanol und/oder Ethanol und/oder Aceton verwendet werden.

10. Verfahren nach einem der Ansprüche 1 bis 9, **dadurch gekennzeichnet, dass** die Gießlösung auf einem Trägermaterial ausgegossen wird, insbesondere auf einem nichtgewebten Vliesmaterial.

11. Verfahren nach einem der Ansprüche 1 bis 10, **dadurch gekennzeichnet, dass** das Kohlenhydrat nach dem Ausfällen der Membran ausgewaschen wird.

12. Polymermembran mit isoporöser trennaktiver Schicht, insbesondere einer Ultrafiltrationsmembran oder Nanofiltrationsmembran, hergestellt oder herstellbar nach einem Verfahren nach einem der Ansprüche 1 bis 11 mit einem Verhältnis der maximalen Porendurchmesser zu den minimalen Porendurchmessern von weniger als 3, wobei die Polymermembran nach dem Ausfällen der Membran wenigstens ein Kohlenhydrat enthält.

13. Filtrationsmodul, insbesondere Ultrafiltrationsmodul oder Nanofiltrationsmodul, mit einer Polymermembran nach Anspruch 12.

14. Verwendung einer Polymermembran nach Anspruch 12 oder eines Filtrationsmoduls nach Anspruch 13 zur Reinigung von Wasser oder von biologischen Makromolekülen oder Wirkstoffen.

## Claims

1. A method for producing a polymer membrane with an isoporous separation active layer, in particular an ultrafiltration membrane or nanofiltration membrane, with the following steps:
- production of a casting solution with at least one solvent, in which at least one amphiphilic block copolymer with at least two different polymer blocks and at least one carbohydrate are dissolved, wherein the polymer makes up a weight proportion between 10 wt.-% and 40 wt.-% and the carbohydrate a weight proportion between 0.1 wt.-% and 5 wt.-% of the solution,
- spreading out of the casting solution to a film,
- during a waiting period between 5 seconds and 60 seconds, evaporation of a nearsurface part of the at least one solvent,
- precipitation of a membrane by immersing the film into a precipitation bath comprising at least one non-solvent for the block copolymer,
wherein the at least one block copolymer comprises two or three different polymer blocks A, B and, if applicable, C of the configuration A-B, A-B-A or A-B-C, wherein the polymer blocks are selected from the group of polystyrene, poly-4-vinylpyridine, poly-2-vinylpyridine, polybutadiene, polyisoprene, poly(ethylene-stat-butylene), poly(ethylene-alt-propylene), polysiloxane, polyalkylene oxide, poly-ε-caprolactone, polylactide, polyalkylmethacrylate, polymethacrylic acid, polyalkylacrylate, polyacrylic acid, polyhydroxymethacrylate, polyacrylamide, poly-N-alkylacrylamide, polysulfone, polyaniline, polypyrrole, polytriazole, polyvinylimidazole, polytetrazole, polyethylene diamine, polyvinyl alcohol, polyvinylpyrrolidone, polyoxadiazole, polyvinyl sulphonic acid, polyvinyl phosphonic acid or polymers with quaternary ammonium groups.

2. The method according to claim 1, **characterized in that** the carbohydrate is saccharose, D(+)-glucose, D(-)-fructose and/or cyclodextrin, in particular α-cyclodextrin.

3. The method according to claim 1 or 2, **characterized in that** the block copolymers and the polymer blocks have a low polydispersity, in particular less than 1.5, in particular less than 1.2, and/or that the polymer lengths of the at least two polymer blocks of the amphiphilic block copolymer are selected relative to each other such that a self organization in the solvent leads to the formation of a spherical or cylindrical micelle structure in the solvent, in particular a length ratio between approx. 2:1 and approximately 10:1, in particular between 3:1 and 6:1.

4. The method according to one of claims 1 to 3, **characterized in that** the block copolymer has a molecular weight between 100 kDa and 600 kDa, in particular between 130 kDa and 250 kDa.

5. The method according to one of claims 1 to 4, **characterized in that** at least one homopolymer and/or copolymer is dissolved in the solution, which corresponds to a polymer block of the amphiphilic block copolymer with the same or deviating polymer lengths.

6. The method according to one of claims 1 to 5, **characterized in that** several solvents are used, wherein the polymer blocks of the block copolymer have different levels of solubility in the different solvents and the solvents have different volatilities, wherein in particular dimethylformamide and/or dimethyleacetamide and/or N-Methylpyrrolidone and/or dimethyl sulfoxide and/or tetrahydrofuran and/or dioxane and/or a mixture of two or more of these solvents are used as the solvent.

7. The method according to one of claims 1 to 6, **characterized in that** the polymer makes up a weight proportion between 15 wt.-% and 25 wt.-% of the solution and/or the carbohydrate makes up a weight proportion between 0.5 wt.-% and 2 wt.-% of the solution.

8. The method according to one of claims 1 to 7, **characterized in that** the waiting period is less than 25 seconds, in particular up to 15 seconds.

9. The method according to one of claims 1 to 8, **characterized in that** water and/or methanol and/or ethanol and/or acetone are used as the precipitation bath.

10. The method according to one of claims 1 to 9, **characterized in that** the casting solution is cast on a carrier material, in particular on a nonwoven fleece material.

11. The method according to one of claims 1 to 10, **characterized in that** the carbohydrate is washed out after the precipitation of the membrane.

12. A polymer membrane with isoporous separation active layer, in particular an ultrafiltration membrane or nanofiltration membrane, produced or producible according to a method according to one of claims 1 to 11 with a ratio of the maximum pore diameter to the minimum pore diameter of less than 3, wherein the polymer membrane contains at least one carbohydrate after the precipitation of the membrane.

13. A filtration module, in particular an ultrafiltration module or nanofiltration module, with a polymer membrane according to claim 12.

14. Use of a polymer membrane according to claim 12 or a filtration module according to claim 13 for cleaning water or biological macromolecules or active ingredients.

## Revendications

1. Procédé de fabrication d'une membrane en polymère ayant une couche de séparation active isoporeuse, en particulier une membrane d'ultrafiltration ou une membrane de nanofiltration, comprenant les étapes consistant à :
- préparer une solution de coulée comprenant au moins un solvant, dans laquelle sont dissous au moins un copolymère séquencé amphiphile ayant au moins deux blocs polymères différents et au moins un hydrate de carbone, le pourcentage en poids du polymère étant compris entre 10% en poids et 40% en poids de ladite solution et le pourcentage en poids de l'hydrate de carbone étant compris entre 0,1% en poids et 5% en poids de ladite solution,
- répandre la solution coulée de façon à former un film,
- permettre à une partie dudit au moins un solvant proche de la surface de s'évaporer au cours d'une période d'attente allant de 5 secondes à 60 secondes,
- précipiter une membrane par immersion du film dans un bain de précipitation comprenant au moins un non-solvant pour le copolymère séquencé,
dans lequel ledit au moins un copolymère séquencé comprend deux ou trois blocs de polymères mutuellement différentes A, B et éventuellement C, de configurations A-B, A-B-A ou A-B-C, les blocs polymères étant choisis chacun dans le groupe constitué du polystyrène, du poly-4-vinylpyridine, du poly-2-vinylpyridine, du polybutadiène, du polyisoprène, du poly(éthylène-stat-butylène), du poly(éthylène-alt-propylène), du polysiloxane, d'un oxyde de polyalkylène, du poly-ε-caprolactone, du polylactide, du méthacrylate de polyalkylène, d'un acide polyméthacrylique, d'un polyalkylène acrylate, d'acide polyacrylique, d'un polyhydroxyethyl methacrylate, du polyacrylamide, du poly-N-alkyl acrylamide, de la polysulfone, de la polyaniline, du polypyrrole, du polytriazole, du polyvinylimidazole, du polytetrazole, du polyéthylène-diamine, de l'alcool polyvinylique, de la polyvinylpyrrolidone, du polyoxadiazole, de l'acide polyvinylsulfonique, de l'acide polyvinylphosphonique ou de polymères choisis avec des groupes ammonium quaternaire.

2. Procédé selon la revendication 1, **caractérisé en ce que** l'hydrate de carbone est le saccharose, le glucose D(+)(= dextrose), le fructose D(-)(= fructose) et / ou la cyclodextrine, en particulier une α-cyclodextrine.

3. Procédé selon la revendication 1 ou la revendication 2, **caractérisé en ce que** les copolymères séquencés et les blocs de polymère ont une faible polydispersité, en particulier inférieure à 1,5, notamment inférieure à 1,2, et / ou **en ce que** les longueurs de polymères d'au moins deux blocs de polymères du copolymère séquencé amphiphile sont choisis les uns par rapport aux autres de telle sorte qu'une auto-organisation dans le solvant conduit à former une structure micellaire sphérique ou cylindrique dans le solvant, ayant en particulier un rapport de longueur compris entre environ 2:1 et environ 10:1, en particulier entre environ 3:1 et 6:1.

4. Procédé selon l'une quelconque des revendications 1 à 3, **caractérisé en ce que** le copolymère séquencé a un poids moléculaire compris entre 100 kDa et 600 kDa, de manière préférée compris entre 130 kDa et 250 kDa.

5. Procédé selon l'une quelconque des revendications 1 à 4, **caractérisé en ce qu'**au moins un homopolymère et / ou un copolymère est dissous dans la solution, correspondant à un bloc polymère du copolymère séquencé amphiphile ayant la même longueur de polymère ou une longueur différente.

6. Procédé selon l'une quelconque des revendications 1 à 5, **caractérisé en ce que** plusieurs solvants sont utilisés, lorsque les blocs des polymères du copolymère séquencé dans les différents solvants sont solubles selon des degrés différents et que les solvants sont volatilsselon des degrés différents, le solvant utilisé étant en particulier le diméthylformamide et / ou le diméthylacétamide et / ou le N-méthylpyrrolidone et / ou le diméthylsulfoxyde et / ou le tétrahydrofurane et / ou le dioxane, ou un mélange de deux ou de plusieurs de ces solvants.

7. Procédé selon l'une quelconque des revendications 1 à 6, **caractérisé en ce que** le pourcentage en poids du polymère est comprise entre 15% en poids et 25% en poids de ladite solution et / ou **en ce que** le pourcentage en poids de l'hydrate de carbone est compris entre 0,5% et 2% en poids de ladite solution.

8. Procédé selon l'une quelconque des revendications 1 à 7, **caractérisé en ce que** la période d'attente est inférieure à 25 secondes, en particulier allant jusqu'à 15 secondes.

9. Procédé selon l'une des revendications 1 à 8, **caractérisé en ce que** de l'eau et / ou du méthanol et / ou d'éthanol et / ou l'acétone sont utilisés en tant que bain de précipitation.

10. Procédé selon l'une quelconque des revendications 1 à 9, **caractérisé en ce que** la solution coulée est coulée sur un matériau de support, et en particulier sur un matériau non-tissé.

11. Procédé selon l'une quelconque des revendications 1 à 10, **caractérisé en ce que** l'hydrate de carbone est éliminé par lavage après la précipitation de la membrane.

12. Membrane polymère ayant une couche active de séparation isoporeuse, en particulier une membrane d'ultrafiltration ou une membrane de nanofiltration, préparée ou apte à être préparée par un procédé selon l'une quelconque des revendications 1 à 11, ayant un rapport diamètre maximum des pores / diamètre minimum des pores de moins de 3, la membrane polymère contenant, après la précipitation de la membrane, au moins un hydrate de carbone.

13. Module de filtration, en particulier module d'ultrafiltration ou module de nanofiltration, comprenant une membrane polymère selon la revendication 12.

14. Utilisation d'une membrane polymère selon la revendication 12 ou d'un module de filtration selon la revendication 13 pour la purification de l'eau ou de macromolécules biologiques ou de principes actifs.
